# FASCICULE DE BREVET EUROPEEN

(11) **EP 0 713 047 B1**
(45) Date de publication et mention de la délivrance du brevet: **19.04.2000**
(21) Numéro de dépôt: 95500131.8
(22) Date de dépôt: 26.09.1995
(51) Int. Cl.: F16L 55/10

(54) **Dispositif pour l'interruption du flux dans un conduit de fluides**
Vorrichtung zum Unterbrechen des Durchflusses in einer Flüssigkeitsleitung
Device for interrupting the flow in a fluid conveying pipe

(30) Priorité: 27.09.1994 ES 9402028
(43) Date de publication de la demande: 22.05.1996
(73) Titulaire: Hombravella Abbad, Marcelo D., 08022 Barcelona (ES); Guillo Vive, Daniel, 08037 Barcelona (ES)
(72) Inventeur: Hombravella Abbad, Marcelo D., 08022 Barcelona (ES); Guillo Vive, Daniel, 08037 Barcelona (ES)
(74) Mandataire: Manzano Cantos, Gregorio

(56) Documents cités:
- DE-C- 360 242
- DE-U- 9 015 978
- US-A- 1 613 138
- US-A- 2 800 926
- US-A- 3 642 252
- US-A- 3 674 235
- US-A- 3 788 346
- PATENT ABSTRACTS OF JAPAN vol. 006, no. 010 (M-107), 21 Janvier 1982 & JP-A-56 131864 (MITO HIROSHI), 15 Octobre 1981,
- PATENT ABSTRACTS OF JAPAN vol. 009, no. 215 (M-409), 3 Septembre 1985 & JP-A-60 073174 (ISHIKAWAJIMA HARIMA JUKOGYO KK), 25 Avril 1985,
- NTIS TECH NOTES, 1 Novembre 1989, page 953 XP000080117 U.S. DEPARTEMENT OF THE INTERIOR BUREAU OF RECLAMATION: "HIGH-HEAD VARIABLE-MULTIPLE-ORIFICE THROTTLING VALVE"

## Description

Cette demande a pour objet un dispositif pour l'interruption du flux dans un conduit de fluides, présentant de nouveaux avantages et innovations face aux moyens actuels étant utilisés avec une finalité égale ou similaire.

Plus précisément, l'invention concerne un moyen pour faciliter l'interruption du flux dans un conduit et son application dans les branchements sous pression.

### ANTÉCÉDENTS DE L'INVENTION

Comme référence à l'état de la technique, il faut mentionner que l'interruption du flux en conduites de fluides est effectuée à l'aide de différents modèles de robinets d'arrêt comprenant des installations trop élaborées et avec une performance peu efficace, avec des pertes de charge considérables.

Le document US Patent N° 1613138 de J.H. SEYMOUR, expose un membre articulé servant à couper le passage de fluide entre deux parties d'un conduit ou entre deux valves comprenant deux positions, une passive, l'autre active. La première se place sur un organe externe d'articulation ayant des moyens de retenue du membre de coupe; qui a des guides servant au déplacement radial de ce membre de coupe à travers l'organe externe que les moyens ont à leur tour pour le maintien de la communication des conduits et qui, associé à ce membre de coupe, agira en bloquant le passage entre les conduits en question

Le document US-A-3674235 de Mr. E. PORTER et Mr. J. BURKHOLDER, expose un élément de fermeture, selon la première partie de la revendication, qui comprend un élément conformé substantiellement sous forme de disque qui possède un diamètre externe substantiellement égal au diamètre interne du corps cylindrique et qui a été adapté pour être inséré à l'intérieur de l'extrémité ouverte de celui-ci et, par conséquent, on peut faire tourner le clapet autour de l'axe du corps.

Finalement, un élément de manche, allongué, disposé au centre, a été prévu sur la face opposée du disque et s'étend axialement vers l'extérieur de celui-ci pour faciliter la rotation de l'élément cylindrique à l'intérieur du corps pendant l'ouverture et la fermeture de la vanne.

### DESCRIPTION DE L'INVENTION

Le dispositif d'interruption du flux dans un conduit de fluides, obiet de cette nvention, permet la résolution avantageuse des inconvénients mentionnés ci-dessus, car il s'agit d'un dispositif de constitution simple et de montage facile et rapide, tout en ayant une performance remarquablement haute.

L'invention consiste en un dispositif tel que défini dans la revendication 1.

L'introduction de la lame de coupe peut être faite simplement par l'extraction de deux des vis unissant les brides et desserrant les autres.

Aussi, les brides devront être suffisamment séparées, mais sans qu'il y ait de pertes, la lame de coupe pouvant ainsi passer entre celles-ci.

Pour obtenir la séparation précise entre les brides au moment d'introduction de la lame de coupe de différents systèmes sont possibles, comme par exemple des vis limitatrices de séparation taraudées à une des brides, des goupilles aux extrêmités des vis unissant les brides pour limiter l'élévation des écrous, et des cliquets munis de languette s'accouplant aux bords des brides au moment d'opérer avec la lame de coupe pour obtenir une position correcte entre les deux brides, entre autres.

Pour faciliter la manoeuvre d'interruption du flux, il a été prévu qu'une ou les deux brides soient munies d'une oreille percée agissant comme axe autour duquel pourra tourner la lame de coupe selon un mouvement en cercle. Cette oreille peut être fixe ou non, et peut être, par exemple, taraudée au bord de la bride.

L'invention est appliquée pour effectuer des branchements sous pression lors des ravitaillements d'eau, gaz ou autre fluides.

Dans ce but, un ensemble composé par deux corps tubulaires est installé sur la tuyauterie, entre lesquels la lame de coupe pourra être insérée.

Un des corps mentionnés a la forme d'une bobine, l'autre présentant une forme circulaire correspondant au premier servant de base ou selle qui se rattache à la tuyauterie à l'aide de sangles.

Ces sangles s'unissent à la selle à l'aide de vis s'appuyant sur des rotules, dans le but d'obtenir l'orientation la plus correcte en fonction du diamètre de la tuyauterie sur laquelle ils sont installés.

Cette selle dispose d'un joint supérieur sur la face de la bride et un joint inférieur assurant l'étanchéité avec la tuyauterie.

Le joint supérieur, pouvant être par exemple un joint torique, se trouve en contact avec la bride inférieure de la bobine et est celui qui maintient l'étanchéité en introduisant la lame de coupe tandis que le joint inférieur se projette de manière telle à pouvoir monter sur différentes tailles de tuyauterie.

Une fois cet ensemble installé sur la tuyauterie, celle-ci est percée; dans ce but, une machine perceuse ad *hoc* est montée sur la bride supérieure du joint.

Une fois le perçage effectué, l'outil de coupe est rétiré à sa position la plus haute, pour permettre l'introduction de la lame de coupe.

Les vis unissant la selle et la bobine se desserrent, la distance correcte entre les brides étant ainsi atteinte au moyen de quelque autre méthode de séparation décrit antérieurement, les deux vis empêchant l'introduction de la lame de coupe étant extraites.

Suite à quoi, la lame de coupe est introduite à fond, en tournant sur le percage de l'oreille; la machine perceuse est extraite par la suite.

Sur la bride supérieure de la bobine, les autres éléments de l'installation sont montés jusqu'à atteindre une soupape d'interruption.

Quand la soupape nouvellement installée sera en position fermée, la lame de coupe peut être retirée, les vis préalablement extraites montées et les vis des brides serrées; le branchement est terminé.

Pour complémenter la description ci-dessous et dans le but d'aider à une meilleure compréhension de ses caractéristiques, ci joint un mémoire descriptif, dont les figures représentent (à titre indicatif, mais non limitatif) les détails les plus significatifs de l'invention.

### DESCRIPTION SOMMAIRE DES DESSINS

Figure 1. Montre une vue en section longitudinale d'un conduit de fluides se trouvant munie d'un dispositif interrupteur du flux selon l'état de la technique.

Figure 2. Montre une section transversale de conduit mentionné dans le Fig. 1 avec la lame de coupe ouverte, où l'on indique la rotation de celle-ci, déterminant les phases d'interruption et circulation du fluide passant par le conduit.

Figure 3. Montre une réalisation de l'invention où l'on indique un montage destiné à la réalisation de branchements sous pression dans un conduit de fluides, selon une vue en perspective de laquelle la lame de coupe a été exclue dans le but d'une meilleure compréhension des principaux éléments constituant le montage.

Figure 4. Montre une vue similaire à la figure 3 précédente où est représentée la lame de coupe en position d'utilisation ou d'interruption du flux.

Figure 5. Montre une vue similaire à la figure 4 précédente avec la lame de coupe écartée de sa position d'utilisation.

Figure 6. Montre une section transversale de la figure 4 précédente.

### DESCRIPTION D'UNE RÉALISATION PRÉCÉDENTE

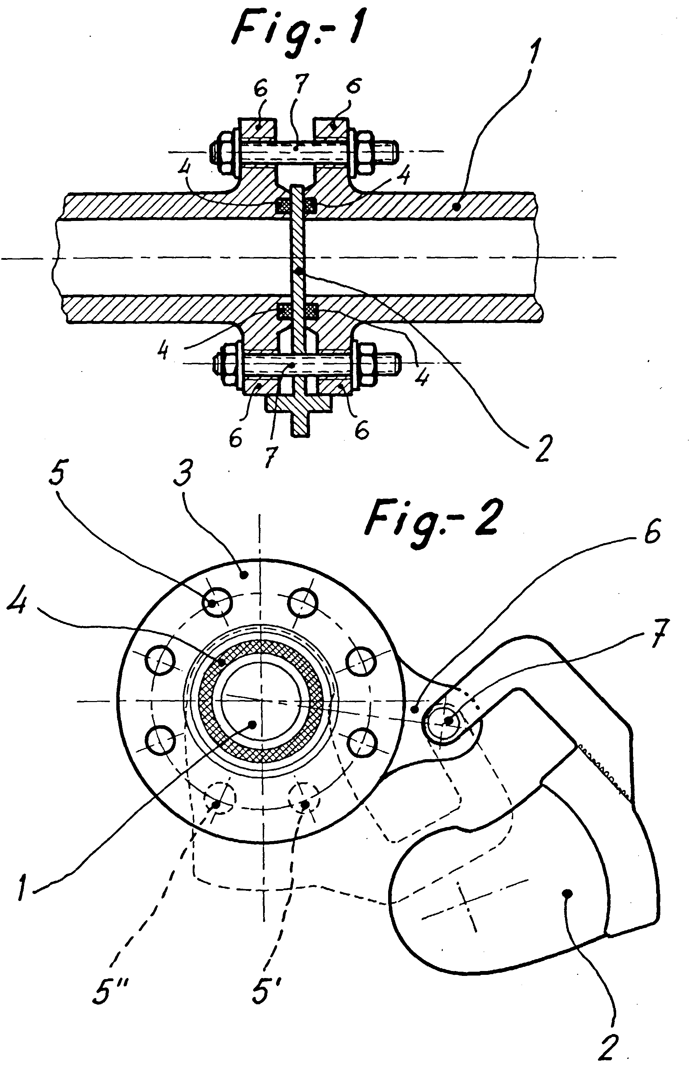

Dans les figure 1 et 2, un conduit de fluides 1 peut être observé où le passage du fluide peut être interrompu par la simple introduction d'une lame de coupe 2 disposée entre les brides 3; dans ce but, une ou les deux brides ont été munies d'un joint approprié 4.

L'introduction de la lame de coupe 2 dans le conduit 1 peut être effectuée moyennant l'extraction de deux des vis 5' et 5", et le desserrement des restantes 5.

Les brides 3 doivent être suffisamment séparées, sans qu'il y ait de fuites, pour que la lame de coupe 2 puisse passer entre elles.

La séparation adéquate antre les brides 3 mentionnées au moment d'introduire la lame de coupe 2 est obtenue par l'usage de différentes méthodes tels que des vis, goupilles, cliquets, etc.

Une ou deux des brides 3 ont une oreille percée 6 dont l'axe 7 est le point autour duquel tourne la lame de coupe 2 selon un mouvement circulaire, facilitant ainsi la manoeuvre d'interruption du flux.

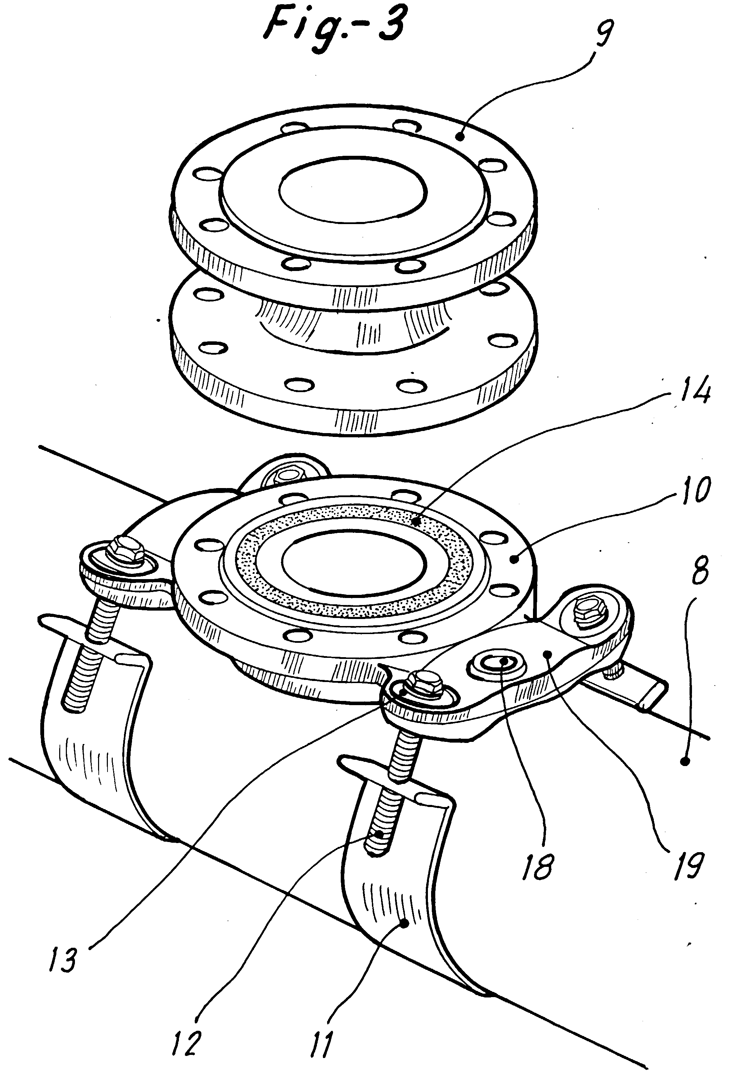

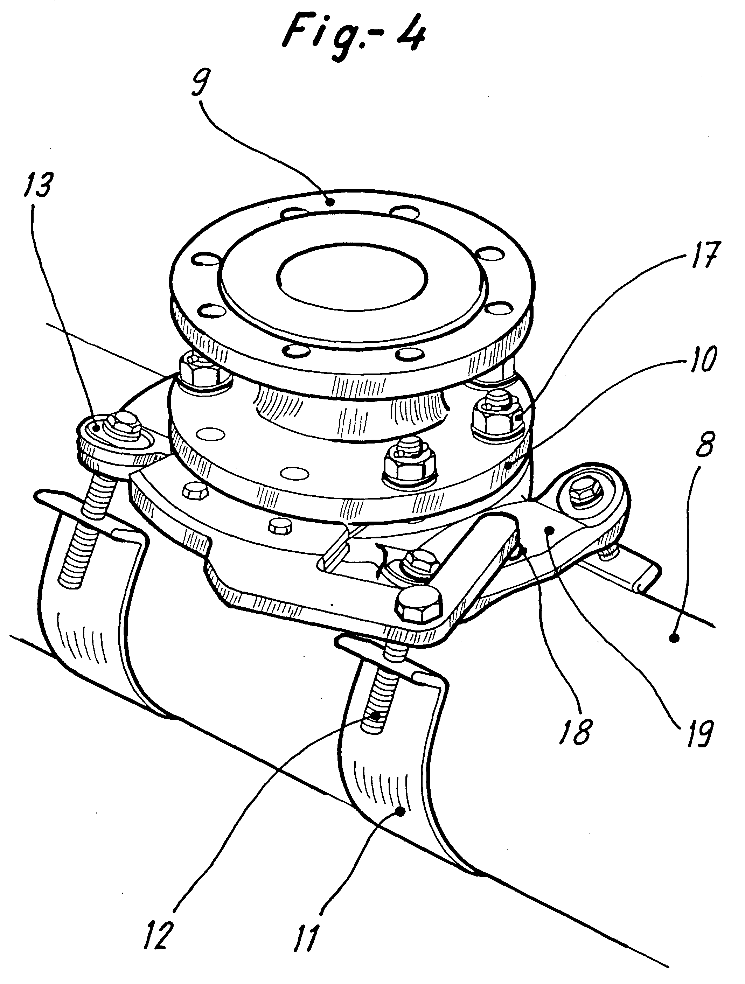

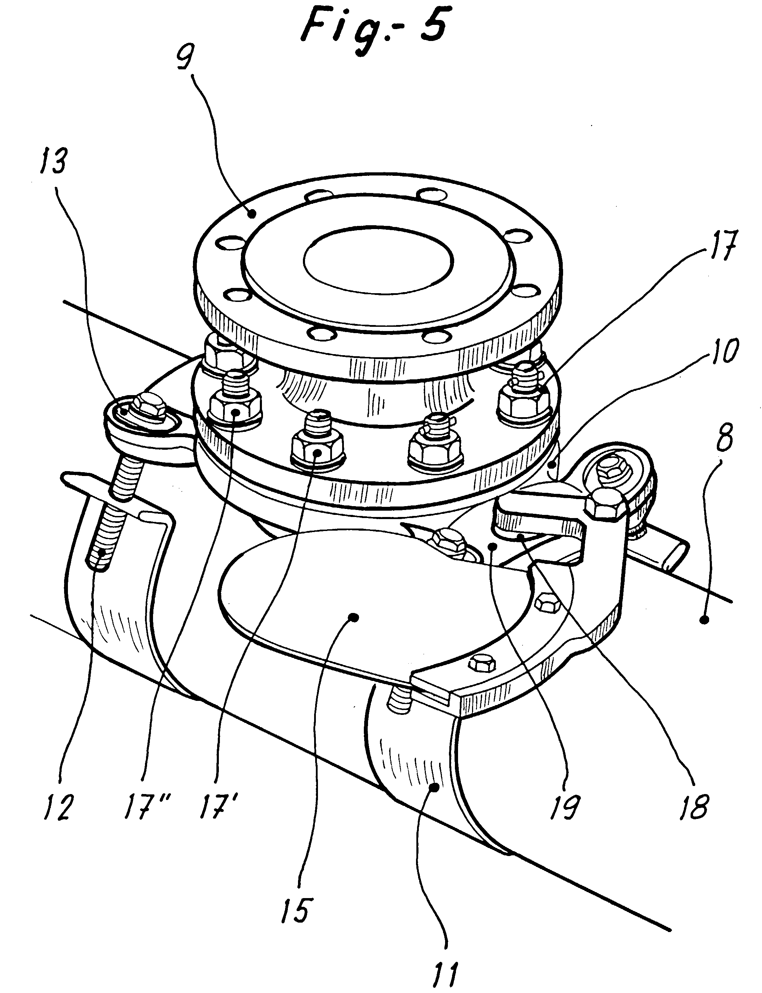

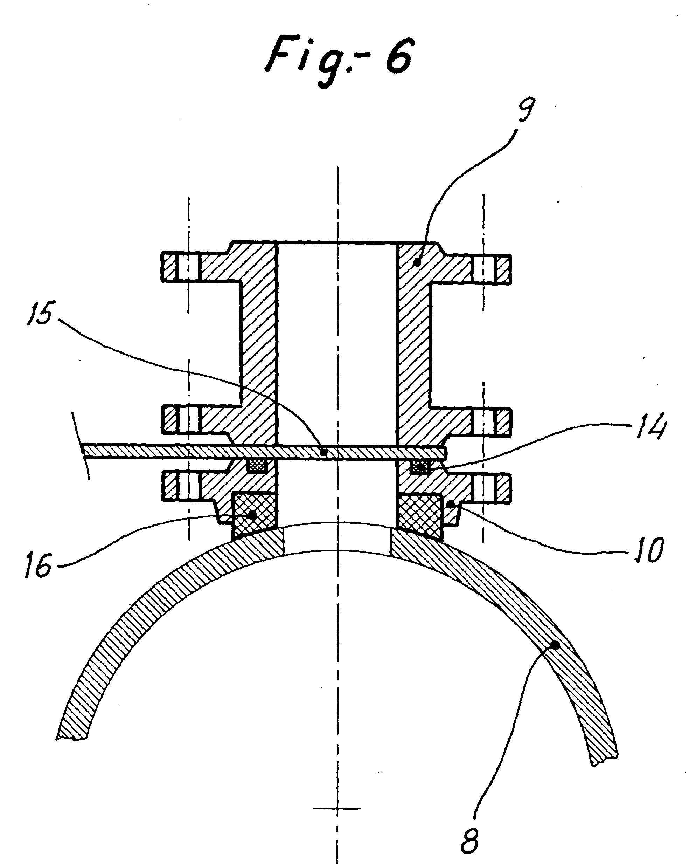

Dans les figures 3 à 6, une version de la réalisation de l'invention est illustrée, consistant en une réalisation de branchements sous pression.

Ces figures permettent l'observation d'un conduit 8 sur lequel est installé un ensemble tubulaire composée par une bobine 9 et une selle 10 s'appuyant sur le conduit 8 au moyen de sangles 11, lesquelles s'unissent à la selle mentionné à l'aide de vis 12 appuyées sur des rotules 13, permettant l'orientation adéquate en fonction du diamètre du conduit sur lequel l'installation est effectuée.

La selle mentionnée 10 dispose d'un joint supérieur 14 se trouvant en contact avec une autre bride disposée sur la face inférieure de la bobine 9, assurant ainsi le maintien de l'étanchéité par l'introduction de la lame de coupe 15 et un joint inférieur 16 dessiné pour le montage sur de diverses tailles de conduit, qui assure l'étanchéité avec le conduit 8.

Une fois que l'installation sur cette conduite 8 de l'ensemble décrit est effectuée, le perçage du conduit est fait; dans ce but, une machine perceuse appropriée est montée sur la bride supérieure de la bobine 9. Cette machine, après l'opération de perçage, retire l'outil de coupe à sa position la plus élevée.

Les vis 17 unissant la chaise 10 et la bobine 9 sont désserrées, la distance appropriée entre brides étant assurée par quelque système convenable, tandis que les deux vis 17' et 17", empêchant l'introduction de la lame de coupe 15 sont extraites, pour que la lame de coupe 15 puisse être insérée à fond en tournant sur le perçage 18 pratiqué sur une oreille 19 de la chaise.

Par la suite, la machine perceuse est extraite et les éléments restants de l'installation sont montés sur la bride supérieure de la bobine 9, jusqu'à arriver à une soupape d'interruption.

Une fois cette soupape installée et en position fermée, la lame de coupe 15 peut être retirée pour procéder au montage des deux vis 17', 17 " préalablement extraites et effectuer l'opération de serrage de toutes les vis 17 des brides, le branchement étant ainsi terminé.

## Revendications

1. DISPOSITIF POUR L'INTERRUPTION DU FLUX DANS UN CONDUIT DE FLUIDES, constitué par un ensemble tubulaire prévu pour être monté sur la conduite et muni de brides et joints appropriés **caractérisé** en ce que l'ensemble tubulaire comprend une bobine (9) ayant une bride à chaque extrémité, une selle (10) ayant une bride à une extrémité et des sangles (11) attachées à la selle (10), par exemple au moyen de vis (12) prenant appui sur des rotules (13), permettant la fixation de la selle à la conduite par son autre extrémité, et une lame de coupe (15) interposée entre une première bride de la bobine (9) et la bride de la selle (10) en face de la bobine et pivotant sur un perçage (18) ménagé dans une oreille (19) appartenant à une bride de la selle (10), la deuxième bride de la bobine (9) pouvant recevoir une perceuse appropriée pour la réalisation d'un perçage adéquat dans la conduite (8).

## Patentansprüche

1. Vorrichtung zur Unterbrechung einer Strömung in einer Flüssigkeitsleitung, bestehend aus einer Anordnung von Rohren, die auf der Leitung montiert wird und mit geeigneten Flanschen und Dichtungen versehen ist, dadurch gekennzeichnet, dass die Anordnung von Rohren eine Spule (9) umfasst, die an jedem Ende mit einem Flansch versehen ist, sowie einen Sattel (10), der an einem Ende mit einem Flansch versehen ist und mit Schellen (11), die mit dem Sattel (10) verbunden sind, zum Beispiel durch Schrauben (12), die sich auf Kugelgelenken (13) abstützen und so die Befestigung des Sattels am anderen Ende der Leitung ermöglichen, und weiterhin eine Schnittfolie (15), die zwischen einem ersten Flansch der Spule (9) und dem Flansch (10) des Sattels angoerdnet ist, die gegenüber der Spule liegt und drehbar auf einer Bohrung (18) gelagert ist, wobei diese Bohrung an einer Lasche (19) angebracht ist, die zu einem Flansch des Sattels (10) gehört, wobei der zweite Flansch der Spule (9) eine geeignete Bohrmaschine aufnehmen kann, um eine geeignete Bohrung an der Leitung (8) anzubringen.

## Claims

1. DEVICE FOR FLUID INTERRUPTION IN A FLUID PIPE, consisting of a set of tubes intended to be assembled over the conduit and provided with flanges and suitable gaskets, characterized in that the set of pipes consists of a coil (9), provided with a flange at each end, a seating (10) provided with a flange at one end and some clamps (11) joined to the saddle (10), for example by screws (12), which lean over some ball joints (13), permitting the saddle to be fixed to the conduit, at its opposite end and a cutting plate (15), between a first coil (9) flange and the saddle (10) flange, in front of the coil and pivoting over a hole (18) made over a lobe (19) belonging to a saddle (10) flange, the second coil (9) flange being able to receive a suitable drill to make a suitable hole over the conduit (8).
